# EUROPÄISCHE PATENTSCHRIFT

(11) **EP 1 267 039 B1**
(45) Veröffentlichungstag und Bekanntmachung des Hinweises auf die Patenterteilung: **09.11.2005**
(21) Anmeldenummer: 02405362.1
(22) Anmeldetag: 03.05.2002
(51) Int. Cl.: F01D 5/18

(54) **Kühlkonstruktion für Schaufelblatthinterkante**
Cooling configuration for an airfoil trailing edge
Configuration de refroidissement du bord de fuite d'une aube

(30) Priorität: 11.06.2001 US 877042
(43) Veröffentlichungstag der Anmeldung: 18.12.2002
(73) Patentinhaber: Alstom Technology Ltd, 5400 Baden (CH)
(72) Erfinder: Liang, George, Palm City, Florida 34990 (US)

(56) Entgegenhaltungen:
- EP-A- 0 896 127
- US-A- 2 763 920
- US-A- 4 601 638
- US-A- 5 368 441
- US-A- 5 378 108
- US-A- 5 772 397

## Beschreibung

### Technisches Gebiet

Diese Erfindung betrifft die Hinterkante von Schaufelblättern in Gasturbinen und insbesondere eine verbesserte Kühlkonstruktion der Schaufelblatthinterkante.

### Allgemeiner Stand der Technik

Schaufelblätter von Gasturbinen, Turbinenrotorschaufeln und -leitschaufeln erfordern ein umfassendes Kühlen, um eine Schädigung infolge von Überhitzung zu vermeiden. Derartige Schaufelblätter werden typischerweise mit einer Vielzahl von Kanälen und Hohlräumen entworfen, die längs der Spannweite vom Fuss zur Spitze des Schaufelblatts angeordnet sind, damit Kühlfluid hindurchströmen kann. Das Kühlfluid ist typischerweise Luft, die dem Kompressor entnommen wird und die einen höheren Druck und eine niedrigere Temperatur im Vergleich zu dem die Turbine durchströmenden Gas aufweist. Der höhere Druck preßt die Luft durch die Hohlräume und Kanäle, wobei sie Wärme aus den Schaufelblattwänden abführt. Die Kühlluft verläßt das Schaufelblatt schließlich mittels Austrittsschlitzen längs der Seitenwände und an der Hinterkante des Schaufelblatts. Das Kühlen des Schaufelblattmaterials durch eine Kühlkonstruktion aus Kanälen und Hohlräumen erfolgt mittels verschiedener physikalischer Mittel wie Filmkühlung, Aufprallkühlung und Diffusion.

Die Hinterkante des Schaufelblatts ist aus mehreren Gründen schwierig zu kühlen. Zunächst weist die Kühlluft zu der Zeit, wenn sie die Hinterkante erreicht, eine erhöhte Temperatur auf, wodurch der Temperaturunterschied zwischen ihr und dem zu kühlenden Material reduziert wird. Zweitens ist das Material der Hinterkante relativ dünn, so daß es besonders empfindlich auf die thermischen Beanspruchungen und Schädigungen infolge Überhitzens ist.

Außerdem wurden Anstrengungen unternommen, die Dicke des hinteren Bereichs zu minimieren, um die Aerodynamik des Schaufelblatts zu verbessern. Eine dünne Hinterkante weist eine geringere Blockierung des Arbeitsfluids auf und reduziert so den Druckverlust, was eine bessere Turbinenleistung ermöglicht. Daher wird, wenn die Aerodynamik des Schaufelblatts durch die Reduzierung der Kantendicke verbessert wird, die Kühlung des Schaufelblattmaterials zu einer größeren Herausforderung.

Das deutsche Patent DE 25 55 049 (US 4.153.386) offenbart ein Beispiel eines Schaufelblatts mit einer Hinterkante, die einen Durchlaß für Kühlfluid aufweist, der von einem inneren Hohlraum zu einem Austrittsschlitz führt. Rechtwinklige Ecken bilden die Endteile der Hinterkante mit dem Austrittsschlitz. Die endliche Dicke und die scharfen Ecken der Endteile bewirken Wirbel um den Austrittsschlitz, so daß der Kühlwirkungsgrad beeinträchtigt wird. Darüber hinaus ist eine große Menge Kühlfluid erforderlich, um eine ausreichende Verminderung der Kantentemperatur zu bewirken.

Die US 4.601.638 offenbart eine verbesserte Gestaltung der Hinterkante eines Gasturbinenschaufelblatts für einen Flugmotor mit längs der Spannweite angeordneten Kanälen, die von internen Hohlräumen zu Austrittsschlitzen führen. Die Austrittsschlitze für das Kühlfluid sind auf der druckseitigen Wand des Schaufelblatts angeordnet. Hier wird eine sogenannte Beschneidungsstrecke als der Abstand von der Spitze des Schaufelblatts zu der Kante eines Austrittsschlitzes auf der Druckseite definiert, der am weitesten weg von der Hinterkante des Schaufelblatts ist. Die Gestaltung beinhaltet insbesondere ein Verhältnis t/s der Dicke t der druckseitigen Lippe zu der Breite des Kühlfluidkanals s, das gleich oder kleiner als 0,7 ist. Für ein Schaufelblatt mit einer gegebenen Nenndicke t der druckseitigen Lippe von 0.86 mm und einer Dicke d der Hinterkante von 2.0 mm ergibt dieses Verhältnis t/s eine Beschneidungsstrecke gleich oder größer als 6.0 mm. Mit anderen Worten, die Einschränkung hinsichtlich des Verhältnisses t/s ergibt eine Einschränkung der Mindestbeschneidungsstrecke.

Die US 6.004.100 offenbart eine andere Kühlkonstruktion für die Hinterkante eines Gasturbinenschaufelblatts in einem Flugmotor mit ähnlichen Hohlräumen und Kanälen, die zu einem Kühlauslaß auf der druckseitigen Wand führen, durch die das Kühlfluid aus dem Schaufelblatt austreten kann. Die von einem inneren Hohlraum zu dem Kühlauslaß führenden Kanäle weisen einen speziell gestalteten Querschnitt mit einem Paar von Hohlkehlen auf. In einer weiteren Ausgestaltung umfassen die Kanäle jeweils eine Aussparung auf, um eine Ermüdung durch hohe Drehzahlen längs der schmalen Kante zu vermeiden. Die Gestaltung erlaubt es insbesondere, daß die Beschneidungsstrecke sich über die ganze Strecke bis zur Spitze des Schaufelblatts erstreckt. Die resultierenden dünnen Wände können zu Problemen bei der Herstellung des Schaufelblatts führen.

### Darstellung der Erfindung

Eine Aufgabe dieser Erfindung besteht darin, ein Schaufelblatt für eine Gasturbine mit einer Kühlkonstruktion für seine Hinterkante zu schaffen, durch die sowohl die Lebensdauer der Komponenten als auch die Turbinenleistung gegenüber dem Stand der Technik verbessert werden. Eine Aufgabe der Erfindung besteht insbesondere darin, ein Schaufelblatt mit einer minimierten Kantendicke und einer Kühlkonstruktion für ihre Hinterkante zu schaffen, welche die Hinterkante mit einer minimierten Menge von Kühlfluid kühlt.

In der EP 0 896 127 ist ein Schaufelblatt für eine Gasturbine mit einem Kühlsystem offenbart, das Schlitze für den Kühlfluidaustritt im Bereich der Hinterkante der Schaufel aufweist. Die Schlitze sind durch die Spitze der Hinterkante sowie durch die Druckseite der Schaufel gebildet. Die Spitze der Hinterkante besitzt im Querschnitt eine gerundete Form, wobei dei runde Form von der Saugseite bis zum Ende der Schlitze sich erstreckt, das heisst bis zu dem Punkt, in dem die verlängerung der Tangente und die Druckseite der Schaufel die Spitze der Hinterkante berührt. Die Schlitze selbst verlaufen geradlinig mit jeweils einem Knickwinkel.

Ein an einem Rotor in einer Gasturbine angebrachtes Schaufelblatt umfaßt eine druckseitige Wand und eine saugseitige Wand, jeweils mit einer Innenfläche und einer Außenfläche. Einer oder mehrere Hohlräume sind längs der Spannweite und/oder radial zwischen der druckseitigen und der saugseitigen Wand angeordnet. Ein Kühlfluid, das einer Kühlfluidquelle entnommen wird, strömt durch die Hohlräume. Außerdem sind eine Vielzahl von Austrittskanälen in dem Schaufelblatt angeordnet, die von den Hohlräumen zu Austrittsöffnungen führen, die auf der druckseitigen Wand und nahe der Hinterkante des Schaufelblatts angeordnet sind. Die Austrittskanäle sind zum Teil durch die Innenflächen der saugseitigen Wand und einer druckseitigen Lippe begrenzt, das heißt dem Endteil der druckseitigen Wand, die zu den Austrittsöffnungen an der Hinterkante führt. Die saugseitige Wand verläuft so, daß sie die Spitze der Hinterkante des Schaufelblatts bildet.

Erfindungsgemäß ist die saugseitige Wand so geformt, daß die Spitze der Hinterkante des Schaufelblatts einen Querschnitt aufweist, der einen Teil eines Kreises umfaßt, wobei der Teil des Kreises gleich oder kleiner als ein Halbkreis ist. Der Teil des Kreises verläuft von der Saugseite des Schaufelblatts um die Spitze des Schaufelblatts herum zur Druckseite des Schaufelblatts und darüber hinaus in den Austrittskanal. Die Austrittskanäle umfassen jeweils in dem Bereich der Spitze der Hinterkante des Schaufelblatts eine Krümmung zur Druckseite hin, wobei die Austrittskanäle eine Austrittskammer bilden, in der das Kühlfluid sich verteilt und die Hinterkante des Schaufelblatts kühlt.

Die Erfindung beruht somit auf einem Konzept einer vielfachen Verteilung, das durch die Verteilung des Kühlfluidstroms aus den mehreren Austrittskanälen um den Krümmungsbereich der mehreren Austrittsöffnungen herum in die große Austrittskammer hinein realisiert wird. Dies wird insbesondere durch die gerundete Form des erfindungsgemäßen Spitzenbereichs der saugseitigen Wand des Schaufelblatts realisiert.

Die Spitze der erfindungsgemäßen Hinterkante des Schaufelblatts weist einen Querschnitt auf, der einer Nase ähnelt. Kühlfluid strömt aus den inneren Hohlräumen durch die Austrittskanäle zu den Austrittsöffnungen. Wenn es den Bereich der nasenförmigen Spitze erreicht, trifft es auch auf die Krümmung der Kanäle, die von der Innenfläche der saugseitigen Wand begrenzt wird. Das Kühlfluid prallt auf die Innenfläche der saugseitigen Wand auf und kühlt den Bereich der Spitze der Hinterkante des Schaufelblatts durch Aufprallkühlung. Der Krümmung der Innenfläche der saugseitigen Wand folgend strömt es zur Austrittsöffnung auf der druckseitigen Wand hin. Es strömt in eine Austrittskammer in dem Bereich der Krümmung und der druckseitigen Lippe, verteilt sich und kühlt durch Filmkühlung die gerundete Spitze des Schaufelblatts. Die Spitze der Hinterkante wird somit sowohl durch Aufprallkühlung als auch durch Filmkühlung gekühlt.

In Längsrichtung des Schaufelblatts führt eine Vielzahl von Austrittskanälen in die Austrittskammer auf der Druckseite des Schaufelblatts. Die Austrittskammer auf der Druckseite ist im Vergleich zu Kühlkonstruktionen des Stand der Technik vergrößert und erlaubt so eine größere Verteilung des Kühlfluids. Infolge der relativ großen Größe der Austrittskammer wird die Geschwindigkeit der Kühlfluidströmung vermindert, wodurch der Wirkungsgrad der Filmkühlung verbessert wird. Die nasenförmige Spitze der Hinterkante des Schaufelblatts bewirkt außerdem, daß das Kühlfluid der Oberfläche der Spitze des Schaufelblatts folgt, während es sie kühlt, wobei sich wenige oder keine Wirbel ausbilden können, die den Kühlwirkungsgrad beeinträchtigen würden. Dies verbessert den Wirkungsgrad der Filmkühlung weiter und vermindert als Resultat davon die Menge erforderlichen Kühlfluids.

Das Kühlen der Hinterkante des Schaufelblatts wird durch Filmkühlung der Spitze einerseits und durch Aufprall auf die Innenfläche der Spitze andererseits verbessert. Dies ermöglicht eine Konstruktion der Hinterkante des Schaufelblatts mit geringerer Dicke, durch die die Aerodynamik des Schaufelblatts und als Folge hieraus die Leistung der Turbine verbessert wird.

Außerdem ist eine Rückzugstrecke vorhanden, die gleich der Strecke zwischen der Spitze der Hinterkante und dem Ende der druckseitigen Lippe ist. Diese Gestaltung der Austrittskanäle mit einer Krümmung und einer gerundeten Form der Spitze verkürzt effektiv die Beschneidungsstrecke. Berechnungen haben gezeigt, daß eine Reduktion der Rückzugstrecke den Wirkungsgrad der Filmkühlung verbessert. Als Folge davon reduziert dieses Merkmal die Menge erforderlichen Kühlfluids.

Bei einer besonderen Ausführungsform der Erfindung weisen die zu den Austrittsöffnungen führenden Austrittskanäle senkrecht zur Kühlfluidströmung einen Querschnitt auf, der kreisförmig, rechtwinklig mit gerundeten Ecken oder länglich ist. Die Seitenwände des Kanals laufen in Richtung der Kühlfluidströmung auseinander, so daß die Strömungsgeschwindigkeit des Kühlfluids weiter vermindert und der Wirkungsgrad der Filmkühlung verbessert wird.

Bei einer besonderen Ausführungsform der Erfindung beträgt der Ausbreitungswinkel des Austrittskanals weniger als drei Grad. Berechnungen haben gezeigt, daß für diesen Grad des Ausbreitens der Kühlwirkungsgrad optimiert wird. Insbesondere für den Bereich des Verhältnisses der Länge zum Durchmesser des Kühlkanals, der für ein typisches Schaufelblatt gegeben ist, verhindert ein Ausbreitungswinkel von weniger als drei Grad eine innere Strömungsseparation und einen höheren Verlustkoeffizienten.

Die Austrittskanäle führen zu einer großen Austrittskammer. Für die strukturelle Festigkeit des Schaufelblatts werden in diesem Bereich Stützrippen im wesentlichen parallel zu den Austrittskanälen angeordnet. Die Stützrippen werden alle zwei oder mehr Austrittskanäle angeordnet. Beispielsweise verlaufen vier Austrittskanäle zur Krümmung und auf die Druckseite des Schaufelblatts, wobei an den ersten und an den vierten Austrittskanal auf einer Seite eine Stützrippe angefügt wird, die bis zum Spitzenteil der Hinterkante des Schaufelblatts verläuft. Die großen Austrittskammern werden zwischen derartigen Stützrippen ausgebildet. In diesen Austrittskammern kann das Kühlfluid sich nicht nur in Richtung auf die Spitze der Hinterkante, sondern auch in radialen Richtungen verteilen. Innerhalb dieser Austrittskammer ist ein Vermischen des Kühlfluids mit der Hauptgasströmung und die Ausbildung von Wirbeln im großen und ganzen verhindert, wodurch der Wirkungsgrad der Filmkühlung verbessert wird.

Bei einer besonderen Ausführungsform der Erfindung ist die Größe der Rückzugsstrecke kleiner als 0,12 Zoll. Die verkürzte Rückzugsstrecke trägt zu dem verbesserten Wirkungsgrad der Filmkühlung bei. Außerdem ergibt die vorliegende Erfindung eine kleinere Rückzugsstrecke mit einer größeren Dicke der Hinterkante.

Bei einer weiteren Ausführungsform der Erfindung ist die Oberfläche des Schaufelblatts mit einer Schutzbeschichtung versehen. Die Beschichtung wird auf die Außenfläche der druckseitigen Wand und der saugseitigen Wand aufgebracht. Die Beschichtung dient als Schutz gegen Erosion, Korrosion und Oxidation. Sie wird mit einer großen Dicke von 0.34 bis 0.44 mm aufgebracht, was für eine längere Oxidationslebensdauer und somit eine deutlich größere Komponentenlebensdauer sorgt, da die Komponentenlebensdauer exponentiell mit der Dicke der Beschichtung zunimmt.

Die Dicke der Hinterkante des Schaufelblatts ist im Vergleich zu Gestaltungen des Stand der Technik vermindert. Eine dünne Dicke der erfindungsgemäßen Hinterkante kann eine dicke Schutzbeschichtung aufnehmen, während die Dicke der resultierenden Hinterkante immer noch kleiner als die des Stand der Technik ist und eine verminderte Behinderung des Gasstroms aufweist.

Außerdem weist die Gestaltung gemäß der vorliegenden Erfindung eine relativ große Austrittskammer auf, so daß die Schutzbeschichtung aufgenommen werden kann, ohne den Strom des Kühlfluids aus der Austrittsöffnung zu blockieren oder zu behindern.

Bei einer besonderen Ausführungsform der Erfindung ist die Dicke der druckseitigen Lippe gleich oder größer als 0.86 mm und der Durchmesser der Hinterkante, das heißt der Durchmesser der nasenförmigen Spitze des Schaufelblatts, ist gleich oder größer als 2.0 mm.

Bei einer weiteren besonderen Ausführungsform der Erfindung weist die Austrittsöffnung des Austrittskanals eine Breite auf, die gleich oder kleiner als 2.0 mm ist.

Bei einer weiteren besonderen Ausführungsform der Erfindung ist das Verhältnis der Dicke der druckseitigen Lippe zur Höhe des Austrittskanals des Kühlfuids größer als 0,7.

### Kurze Beschreibung der Zeichnungen

Figur 1 zeigt einen Querschnitt parallel zur Rotorachse eines typischen luftgekühlten Schaufelblatts,
Figur 2 zeigt einen vergrößerten Hinterkantenabschnitt des Schaufelblatts von Figur 1 mit erfindungsgemäßer Formgebung,
Figur 3 zeigt einen Querschnitt des Schaufelblatts längs der Spannweite mit Austrittsöffnungen für die Kühlluft in die Austrittskammer.

### Ausführliche Beschreibung

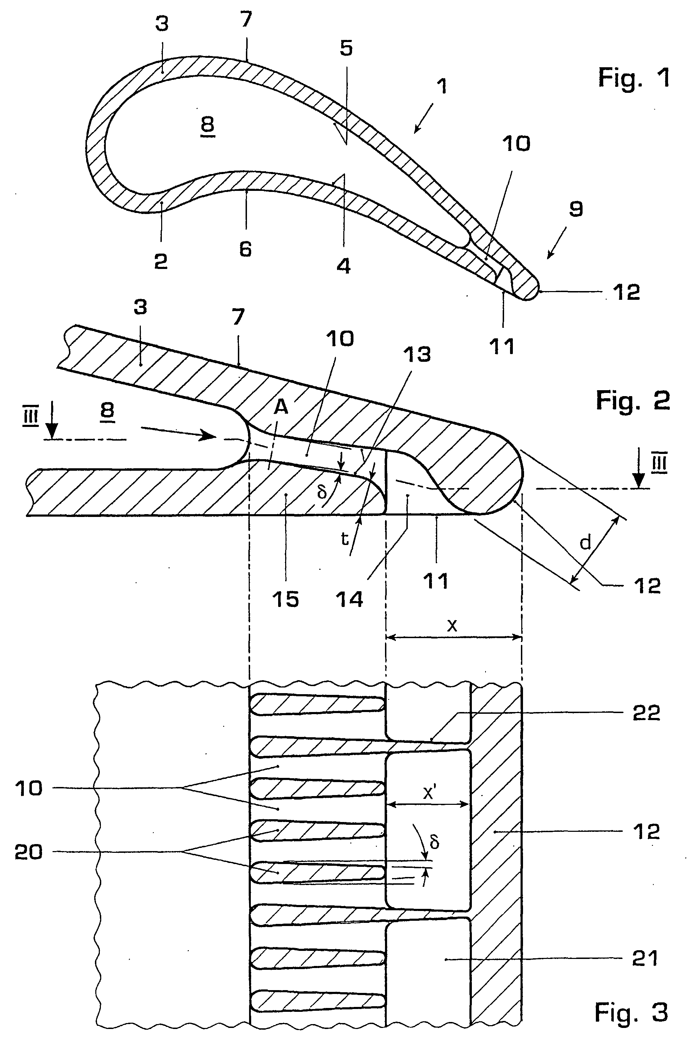

Figur 1 zeigt einen Querschnitt eines typischen Schaufelblatts 1 einer Gasturbine mit einer druckseitigen Wand 2 und einer saugseitigen Wand 3. Die druckseitige Wand 2 und die saugseitige Wand 3 weisen jeweils eine Innenfläche 4, 5 und eine Außenfläche 6, 7 auf, wobei die Innenflächen 4, 5 einen hohlen Innenraum 8 begrenzen, durch den Kühlfluid fließen kann. An der Hinterkante 9 des Schaufelblatts 1 führt ein Austrittskanal 10 aus dem Hohlraum 8 zu einer Austrittsöffnung 11 des Schaufelblatts. Der Austrittskanal ist insbesondere mit einer Krümmung ausgebildet, die den Kanal 10 zu den Austrittsöffnungen 11 auf der druckseitigen Wand 2 des Schaufelblatts 1 lenkt. Das Kühlfluid strömt aus dem Hohlraum 8 durch den Austrittskanal 10 und tritt auf die Druckseite 2 hin aus.

Figur 2 zeigt den Bereich der Hinterkante 9 des Schaufelblatts im Detail. Die saugseitige Wand 3 wird erfindungsgemäß ausgeformt, um den Kühlwirkungsgrad in dem Spitzenbereich des Schaufelblatts zu optimieren. Die saugseitige Wand 3 umfaßt an ihrer Spitze einen gerundeten Teil 12 mit einem in der Figur gezeigten Querschnitt, der Teil eines Kreises mit einem Durchmesser d ist, wobei der Teil des Kreises makimal ein Halbkreis ist. Der Teil des Kreises erstreckt sich über weniger als 180°. Der Durchmesser d besitzt beispielsweise eine Größe von 2.0 mm. Der Austrittskanal 10 aus dem Hohlraum 8 folgt zunächst einer geraden Linie bis zur Krümmung 14. Hier ist ein erster Teil, ein Dosierabschnitt, vorhanden, an dem die Seitenwände 13 des Austrittskanals parallel zur Achse des Austrittskanals verlaufen. Nach einer Strecke von ungefähr dem dreifachen Durchmesser des Austrittskanals 10, die durch den Punkt A angezeigt ist, laufen die Innenwände 13 des Austrittskanals 10 geringfügig in allen Dimensionen relativ zur Achse des Kanals auseinander. Das Auseinanderlaufen der Kanalwände 13 ist durch den Winkel δ angezeigt, der vorzugsweise kleiner als 3° ist. Der Bereich für den Winkel δ wird im Hinblick auf das Verhältnis zwischen dem Abstand des Punkts A und des Endes der druckseitigen Lippe zu dem Durchmesser des Austrittskanals gewählt. Dieses Verhältnis ist annähernd drei oder kleiner. Ein größerer Auseinanderlaufwinkel würde einen höheren Verlustkoeffizienten bewirken und kann eine interne Strömungsseparation bewirken. Ein kleiner Ausbreitungswinkel ermöglicht zudem die Implementierung dünner, kurzer Rippen 20 (wie in Figur 3 gezeigt), welche die Strömungsbehinderung vermindert.

Das Verhältnis der Dicke der druckseitigen Lippe zur Höhe oder zum Durchmesser des Austrittskanals ist bei dieser Gestaltung größer als 0,7. Die Lippendicke ist beispielsweise gleich oder größer als 0.86 mm und die Austrittskanalhöhe annähernd 0,025 Zoll.

Der Austrittskanal 10 weist in seinem geraden Bereich senkrecht zur Strömung des Kühlfluids einen Querschnitt auf, der länglich oder rechtwinklig mit abgerundeten Ecken ist. Diese Form ist manchmal auch als "Rennbahn"-Form bekannt. Der Querschnitt kann auch kreisförmig oder längs eines Teils des Austrittskanals kreisförmig und längs eines anderen Teils länglich sein. Wenn der Austrittskanal die Innenseite des gerundeten Teils 12 der Hinterkante erreicht, folgt er einer Krümmung 14, die ihn zur Druckseite des Schaufelblatts hinlenkt. Die druckseitige Wand 3 weist eine druckseitige Lippe 15 mit einer Dicke t von beispielsweise etwa 0.86 mm oder mehr auf. Diese Abmessungen gelten für ein Schaufelblatt mit einer Länge von annähernd 60 mm. Die Dicke t bestimmt zusammen mit der Dicke d der druckseitigen Lippe die Dicke der Hinterkante und die Aerodynamik des Schaufelblatts hinsichtlich der Turbinenleistung. Diese Schaufelblattdicke ist vergleichbar zur oder kleiner als die Schaufelblattdicke von Schaufelblättern des Standes der Technik. Die Rückzugstrecke x, die durch die gerundete Form der Spitze der Hinterkante und die Krümmung im Austrittskanal gemäß der Erfindung erhalten wird, ist jedoch auf 3.0 mm oder weniger verkürzt. Ein Schaufelblatt mit einer Dicke t der druckseitigen Lippe von 0.86 mm und einer Hinterkantendicke d von 2.0 mm weist eine Beschneidungsstrecke auf, die bei gleichen Abmessungen für d und t halb so groß wie die des in der US 4.601.638 präsentierten Schaufelblatts ist. Dies bewirkt einen größeren und verbesserten Kühlwirkungsgrad gegenüber dem Stand der Technik. Der Austrittskanal 10 führt schließlich zu der Austrittsöffnung 11 mit einer Breite x', die annähernd gleich oder kleiner als x-(d/2) ist, wobei x-(d/2) 2.0 mm beträgt.

Das Kühlfluid strömt aus dem Hohlraum durch den Austrittskanal 10, wo seine Geschwindigkeit aufgrund der Ausbreitung des Kanals 10 vermindert wird. Wenn das Fluid die Krümmung 14 erreicht, prallt es auf die Innenfläche 5 der saugseitigen Wand 3 und kühlt dadurch diese Seitenwand. Es folgt dann der Innenfläche des abgerundeten Teils 12, wodurch die Temperatur der Spitze durch Filmkühlung vermindert wird.

Figur 3 zeigt in einem Querschnitt III-III in Längsrichtung des Schaufelblatts 1 mehrere Stützrippen 22, die an jedem vierten Austrittskanal 10 angeordnet sind. Kurze Stützrippen 20, die von den druckseitigen Lippen 15 gebildet werden, trennen die Austrittskanäle 10. Das Kühlfluid strömt durch die Austrittsöffnung 11 mit Breite x' in die Austrittskammer 21 auf der Druckseite des Schaufelblatts 1. In dieser Austrittskammer 21 zwischen den Stützrippen 22 kann das Kühlfluid sich sowohl in axialen als auch radialen Richtungen verbreiten. Seine Geschwindigkeit wird dadurch weiter vermindert, was eine sehr wirksame Filmkühlung im Bereich der Austrittskammer 21 und um den abgerundeten Teil 12 des Schaufelblatts ergibt.

In den Figuren verwendete Bezeichnungen:
- 1: Schaufelblatt
- 2: druckseitige Wand
- 3: saugseitige Wand
- 4: Innenfläche der druckseitigen Wand
- 5: Innenfläche der saugseitigen Wand
- 6: Außenfläche der druckseitigen Wand
- 7: Außenfläche der saugseitigen Wand
- 8: Hohlraum
- 9: Hinterkante
- 10: Austrittskanal
- 11: Austrittsöffnung
- 12: gerundeter Teil der Spitze der Hinterkante
- 13: Innenwände des Austrittskanals
- 14: Krümmung
- 15: druckseitige Lippe
- 20: kurze, die Austrittskanäle stützende Rippe
- 21: Austrittskammer
- 22: Stützrippe
- t: Dicke der druckseitigen Lippe
- δ: Auseinanderlaufwinkel im Austrittskanal
- A: Endpunkt der Dosierstrecke
- d: Durchmesser des gerundeten Teils
- x: Rückzugsstrecke oder Abstand zwischen der druckseitigen Lippe und der Spitze des Schaufelblatts
- x': Breite der Austrittsöffnung 11, gleich x-d/2

## Patentansprüche

1. Schaufelblatt (1) für eine Gasturbine mit einer druckseitigen Wand (2) und einer saugseitigen Wand (3), die jeweils Innenflächen (4, 5) und Außenflächen (6, 7) aufweisen, und mit einem oder mehreren Hohlräumen (8), die in dem Schaufelblatt zwischen der druckseitigen und der saugseitigen Wand (2, 3) angeordnet sind, und wobei ein Kühlfluid durch den einen oder die mehreren Hohlräume (8) strömt, und wobei mehrere Austrittskanäle (10), die zum Teil durch die Innenflächen (4, 5) einer druckseitigen Lippe (15) und die saugseitigen Wände (3) begrenzt werden, von einem Hohlraum (8) zu Austrittsöffnungen (11) auf der Druckseite (2) und nahe der Hinterkante (9) des Schaufelblatts (1) führen, und wobei die saugseitige Wand (3) die Spitze der Hinterkante (9) des Schaufelblatts bildet, und die saugseitige Wand (3) an der Spitze der Hinterkante (9) des Schaufelblatts einen Querschnitt aufweist, der einen Teil eines Kreises umfaßt
**dadurch gekennzeichnet, dass**
der Teil des Kreises im Querschnitt der Spitze der Hinterkante (9) von der Saugseite (3) des Schaufelblatts um die Hinterkante (9) des Schaufelblatts (1) herum zur Druckseite (2) und darüber hinaus in den Austrittskanal (10) hinein verläuft und die Austrittskanäle (10) jeweils im Bereich ihrer Austrittsöffnung (11) eine Krümmung (14) aufweisen, die zur Druckseite (2) der Schaufel (1) hin weist und in die Kreiskrümmung der Hinterkante (9) übergeht, und die Drückseite (2) des Schaufelblatts (1) eine Rückzugsstrecke (x) mit einer Länge gleich oder kleiner als 3.0 mm aufweist.

2. Schaufelblatt (1) nach Anspruch 1
**dadurch gekennzeichnet, daß** die Austrittskanäle (10) senkrecht zu ihren Achsen einen Querschnitt aufweisen, der kreisförmig, rechtwinklig oder länglich ist, während die Seitenwände (13) der Austrittskanäle (10) in der Richtung des Kühlfluidstroms auseinanderlaufen.

3. Schaufelblatt (1) nach Anspruch 2
**dadurch gekennzeichnet, dass** die Seitenwände (13) der Austrittskanäle (10) mit einem Ausbreitungswinkel (δ) relativ zu den Kanalachsen auseinanderlaufen.

4. Schaufelblatt (1) nach einem der vorhergehenden Ansprüche
**dadurch gekennzeichnet, dass** Stützrippen (22) im wesentlichen parallel zu den Austrittskanälen (10) angeordnet sind, und daß alle zwei oder mehr Austrittskanäle (10) eine Rippe (20) angeordnet ist.

5. Schaufelblatt (1) nach einem der vorhergehenden Ansprüche
**dadurch gekennzeichnet, dass**
die Aussenfläche (6) der druckseitigen Wand (2) mit einem Schutzüberzug mit einer Dicke im Bereich von 0.34 mm bis 0.44 mm bedeckt ist.

6. Schaufelblatt (1) nach einem der vorhergehenden Ansprüche
**dadurch gekennzeichnet, daß** die Dicke der druckseitigen Lippe (t) gleich oder grösser als 0.86 mm ist.

7. Schaufelblatt (1) nach einem der vorhergehenden Ansprüche
**dadurch gekennzeichnet, dass** der Durchmesser (d) der Schaufelblatthinterkante gleich oder grösser als 2.0 mm ist.

8. Schaufelblatt (1) nach einem der vorhergehenden Ansprüche,
**dadurch gekennzeichnet, dass** das Verhältnis der Dicke (t) der druckseitigen Lippe zum Durchmesser oder der Höhe des Austrittskanals grösser als 0.7 ist.

9. Schaufelblatt (1) nach einem der vorhergehenden Ansprüche
**dadurch gekennzeichnet, daß** die Breite (x') der Austrittsöffnung gleich oder kleiner als 2.0 mm ist.

10. Schaufelblatt nach Anspruch 3
**dadurch gekennzeichnet, dass** der Ausbreitungswinkel (δ) kleiner als 3° beträgt.

## Claims

1. Blade (1) for a gas turbine with a pressure side wall (2) and a suction side wall (3), each comprising an inner surface (4,5) and outer surface (6,7), and with one or more cavities (8) arranged in the blade between the suction and pressure side walls (2,3), and where a cooling fluid flows through the one or more cavities (8), and where several exit passages (10), delimited in part by the inner surfaces (4,5) of a pressure side lip (15) and the suction side walls (3), lead from one cavity (8) to exit ports (11) on the pressure side (2) and near the trailing edge (9) of the blade (1), and where the suction side wall (3) forms the tip of the trailing edge (9) of the blade, and the suction side wall (3) has at the tip of the blade trailing edge (9) a cross-section which comprises a part of a circle
**characterized in that**
the part of the circle extends in the cross-section of the tip of the trailing edge (9), from the suction side (3) of the blade around the trailing edge (9) of the blade (1) to the pressure side (2) and beyond into the exit passage (10), and the exit passages (10) each comprise a bend (14) in the region of their exit port (11) that is directed towards the pressure side (2) of the blade (1) and merges into the circular curvature of the trailing edge (9), and the pressure side (2) of the blade (1) has a drawback distance (x) with a length of equal to or less than 3.0 mm.

2. Blade (1) according to Claim 1
**characterized in that** the exit passages (10) have a cross-section perpendicular to their axes that is circular, rectangular or oblong whereas the side walls (13) of the exit passages (10) diverge in the direction of the cooling fluid flow.

3. Blade (1) according to Claim 2
**characterized in that** the side walls (13) of the exit passages (10) diverge with a spreading angle (δ) with respect to the passage axes.

4. Blade (1) according to one of the foregoing claims
**characterized in that** supporting ribs (22) are arranged substantially parallel to the exit passages (10) and **in that** a rib (20) is arranged every two or more exit passages (10).

5. Blade (1) according to one of the foregoing claims
**characterized in that** the outer surface (6) of the pressure side wall (2) is coated with a protective coating with a thickness in the range of 0.34 mm to 0.44 mm.

6. Blade (1) according to one of the foregoing claims
**characterized in that** the pressure side lip thickness (t) is equal to or greater than 0.86 mm.

7. Blade (1) according to one of the foregoing claims
**characterized in that** the blade trailing edge diameter (d) is equal to or greater than 2.0 mm.

8. Blade (1) according to one of the foregoing claims
**characterized in that** the pressure side lip thickness (t) to exit passage diameter or height ratio is greater than 0.7.

9. Blade (1) according to one of the foregoing claims
**characterized in that** the exit port width (x') is equal to or less than 2.0 mm.

10. Blade according to Claim 3
**characterized in that** the spreading angle (δ) is less than 3□.

## Revendications

1. Pale (1) pour une turbine à gaz comprenant une paroi côté pression (2) et une paroi côté aspiration (3), lesquelles présentent chacune des faces internes (4, 5) et des faces externes (6, 7), et comprenant un ou plusieurs espaces creux (8) qui sont disposés dans la pale entre la paroi côté pression et la paroi côté aspiration (2, 3), et où un fluide de refroidissement s'écoule à travers l'un ou la pluralité d'espaces creux (8), et où plusieurs canaux de sortie (10), qui sont en partie limités par les faces internes (4, 5) d'une lèvre côté pression (15) et les parois côté aspiration (3), conduisent d'un espace creux (8) à des ouvertures de sortie (11) du côté pression (2) et à proximité du bord arrière (9) de la pale (1), et où la paroi côté aspiration (3) forme la pointe du bord arrière (9) de la pale et la paroi côté aspiration (3) présente au niveau de la pointe du bord arrière (9) de la pale une section transversale qui comprend une portion de cercle,
**caractérisée en ce que**
la portion de cercle dans la section transversale de la pointe du bord arrière (9) s'étend depuis le côté aspiration (3) de la pale autour du bord arrière (9) de la pale (1) jusqu'au côté pression (2) et en outre dans le canal de sortie (10) et les canaux de sortie (10) présentent chacun, dans la région de leur ouverture de sortie (11), une courbure (14) qui est tournée vers le côté pression (2) de la pale (1) et se prolonge par la courbure circulaire du bord arrière (9), et le côté pression (2) de la pale (1) présente une course de retour (x) d'une longueur inférieure ou égale à 3,0 mm.

2. Pale (1) selon la revendication 1,
**caractérisée en ce que** les canaux de sortie (10) présentent, perpendiculairement à leurs axes, une section transversale qui est circulaire, rectangulaire ou oblongue, tandis que les parois latérales (13) des canaux de sortie (10) s'écartent les unes des autres dans la direction du courant de fluide de refroidissement.

3. Pale (1) selon la revendication 2,
**caractérisée en ce que** les parois latérales (13) des canaux de sortie (10) s'écartent les unes des autres avec un angle d'écartement (δ) par rapport aux axes des canaux.

4. Pale (1) selon l'une quelconque des revendications précédentes, **caractérisée en ce que** des nervures de support (22) sont disposées essentiellement parallèlement aux canaux de sortie (10), et **en ce qu'**une nervure (20) est disposée tous les deux canaux de sortie (10) ou plus.

5. Pale (1) selon l'une quelconque des revendications précédentes,
**caractérisée en ce que**
la face externe (6) de la paroi côté pression (2) est recouverte d'un revêtement de protection ayant une épaisseur de 0,34 mm à 0,44 mm.

6. Pale (1) selon l'une quelconque des revendications précédentes, **caractérisée en ce que** l'épaisseur de la lèvre côté pression (t) est supérieure ou égale à 0,86 mm.

7. Pale (1) selon l'une quelconque des revendications précédentes, **caractérisée en ce que** le diamètre (d) de l'arête arrière de la pale est supérieur ou égal à 2,0 mm.

8. Pale (1) selon l'une quelconque des revendications précédentes, **caractérisée en ce que** le rapport de l'épaisseur (t) de la lèvre côté pression au diamètre ou à la hauteur du canal de sortie est supérieur à 0,7.

9. Pale (1) selon l'une quelconque des revendications précédentes, **caractérisée en ce que** la largeur (x') de l'ouverture de sortie est inférieure ou égale à 2,0 mm.

10. Pale selon la revendication 3,
**caractérisée en ce que** l'angle d'écartement (δ) est inférieur à 3°.
